Europäisches Patentamt

European Patent Office

Office européen des brevets

(11) Veröffentlichungsnummer: **0 146 700**
**B1**

(12) **EUROPÄISCHE PATENTSCHRIFT**

(45) Veröffentlichungstag der Patentschrift: **18.04.90**

(51) Int. Cl.⁵: **B 29 C 51/26**

(21) Anmeldenummer: **84111673.4**

(22) Anmeldetag: **29.09.84**

(60) Teilanmeldung 88111517 eingereicht am 18.07.88.

(54) **Vorrichtung zur Herstellung von Gegenständen aus einer Materialbahn einer thermoplastischen Folie und die Verwendung derselben zur Herstellung von Behälterteilen.**

(30) Priorität: **06.10.83 CH 5451/83**

(43) Veröffentlichungstag der Anmeldung:
**03.07.85 Patentblatt 85/27**

(45) Bekanntmachung des Hinweises auf die
Patenterteilung:
**18.04.90 Patentblatt 90/16**

(84) Benannte Vertragsstaaten:
**AT BE CH DE FR GB IT LI LU NL SE**

(56) Entgegenhaltungen:
**DE-A-2 161 272**
**DE-A-2 209 932**
**DE-A-2 600 582**
**US-A-3 234 310**
**US-A-4 099 902**
**US-A-4 289 469**

(73) Patentinhaber: **Servichem AG**
**Untermühleweg 11**
**CH-6300 Zug (CH)**

(72) Erfinder: **Mutti, Werner H.**
**Rigistrasse 16**
**CH-5033 Buchs/AG (CH)**
Erfinder: **Covelli, Bruno**
**Margarethenweg 3**
**CH-5034 Suhr (CH)**

(74) Vertreter: **Blum, Rudolf Emil Ernst et al**
**c/o E. Blum & Co Patentanwälte Vorderberg 11**
**CH-8044 Zürich (CH)**

EP 0 146 700 B1

Courier Press, Leamington Spa, England.

## Beschreibung

Die Erfindung betrifft eine Vorrichtung zur Herstellung von Gegenständen aus einer Materialbahn einer thermoplastischen Folie gemäß dem Oberbegriff des Anspruchs 1 und die Verwendung derselben zur Herstellung von Behälterteilen.

Im Zusammenhang mit Vorrichtungen dieser Art besteht insbesondere bei der Verarbeitung von Materialien mit ungünstigem thermischen Verhalten, aber auch den übrigen in Frage stehenden Materialien das Problem des Materialbahntransports durch die Vorrichtung hindurch, welches bis heute nicht befriedigend gelöst wurde.

Dies insbesonders dann, wenn sich die Folie bei der Erwärmung in Querrichtung dehnt, was zum Beispiel im Bereich einer Strahlungsheizung durch das Eigengewicht der Folie verstärkt werden kann. Soll in solchen Situationen ein Durchhang der Folie verhindert oder reduziert werden, so ist bereichsweise eine geringfügige Querkomponente der Förderung vorzusehen. Bekannte Transporteinrichtungen arbeiten mit beidseitig der Matrialbahn angeordneten Klemmketten oder Stachelketen (vgl. US—PS 4 099 902; US—PS 3 234 310 und US—PS 4 289 469), die über die gesamte Bahnlänge am Rand angreifen. Solche Kettenantriebe haben den Nachteil der ungleichmässigen Verstreckung. Bei intermittierende ablaufenden Arbeitsprozessen ist damit eine Einhaltung exakter Schrittlängen schwierig und unterschiedliche Vorschübe auf den beiden Seiten können zu unerwünschten diagonalen Verstreckungen in der Folienbahn führen. Da Ketten nur in einer Ebene umlaufen können, ist es schwierig, eine bereichsweise lokale Querdehnung den Folie zu bewerkstelligen.

Es stellt sich damit die Aufgabe, eine Transporteinrichtung für die eingangs erwähnte Vorrichtung zu schaffen, welche diese Nachteile nicht aufweist.

Erfindungsgemäss wird diese Aufgabe durch die in Anspruch 1 genannten Merkmale gelöst.

Damit kann die Materialbahn im wesentlichen schlupffrei und ohne ungewollte Verstreckungen synchron durch die gesamte Vorrichtung hindurch transportiert werden, wobei auf Teilstrecken nach Bedarf der Längsförderung eine Querkomponente überlagerbar ist.

Bei Folien der eingangs genannten Art mit ungünstigem thermischen Verhalten tritt ferner nach dem Formen das Problem des massgerechten Austanzens der geformten Gegenstände auf. Dies deshalb, weil die noch warme Folie relativ wenig massstabil ist und insbesondere beim Abkühlen einenur schwer zu erfassender Schwund auftritt. Um dennoch eine ohne die Produktion hemmende Ruhezeit für die Stabilisierung des Materials massgenaue Ausstanzung zu erzielen, ist gemäss einem bevorzugten Ausführungsbeispiels der Erfindung eine mit der Transporteinrichtung zusammenwirkende Längstrennvorrichtug vorgesehen, mittels welcher die Materialbahn vor einer zentrierenden Umfangsstanzstelle zwischen den geformten Gegenständen in Längsrichtung getrennt wird.

Dies erlaubt die voneinander unabhängige Einpassung der einzelnen Gegenstände in die Zentriervorrichtung, so dass eine individuelle Positionierung unabhängig von allenfalls unregelmässigem Massschwund in der Materialbahn ermöglicht wird. Die positionierten Gegenstände können dann mit einem auf die Zentriervorrichtung justierten Stanzmeser auf ihre exakte Umfangsform gebracht werden.

Nachfolgend wird nun anhand der beiliegenden Zeichnung ein Ausführungsbeispiel einer Vorrichtung zur Herstellung von Gegenständen aus einer Materialbahn einer thermoplastischen Folie beschrieben, das die vorstehend erwähnte Aufheizeinrichtung, Ausstanzeinrichtung und Transporteinrichtung in Kombination enthält. Nach Massgabe der vorstehenden und nachfolgenden Ausführungen kann jedoch jede dieser Einrichtungen auch ohne die beiden anderen eingesetzt werden.

Es zeigen:

Fig. 1 eine schematische Queransicht der Vorrichtung, teilweise im Schnitt, längs der Transportrichtung;

Fig. 2 eine schematische Aufsicht entsprechend Fig. 1;

Fig. 3 eine Ansicht eines Ausschnittes der Transporteinrichtung quer zur Transportrichtung in der Materialbahnebene;

Fig. 4 eine Schnittansicht entlang der Linie IV—IV in Fig. 3, und

Fig. 5 eine schematische Schnittansicht längs der Triebachse der Antriebseinrichtung.

Fig. 6 eine Abwandlung der Trenn- und Umfangsstanzstelle,

Fig. 7 einen schematischen Schnitt durch die Umfangsstanzstelle von Fig. 6;

Fig. 8 ein Detail der Trennvorrichtung von Fig. 6.

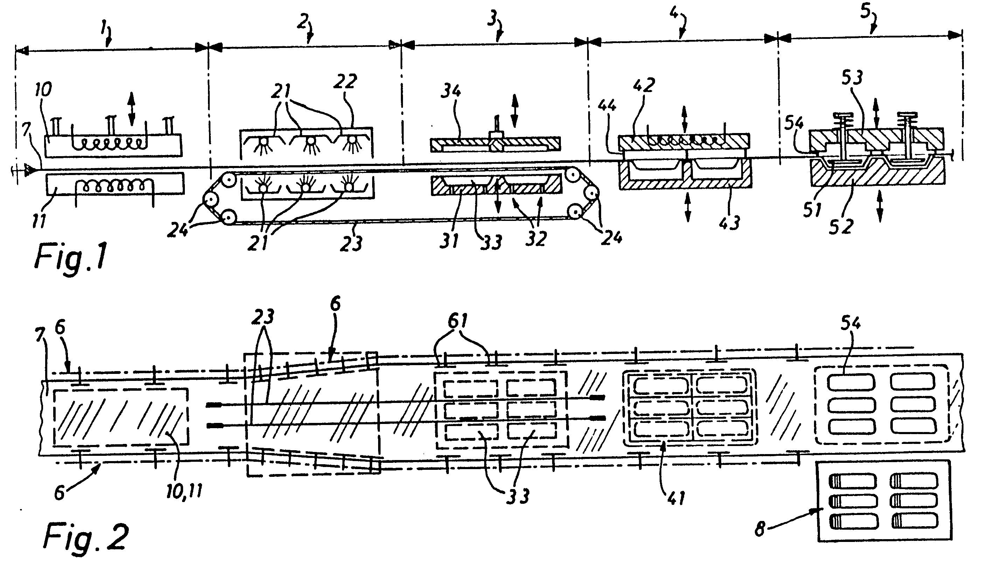

Die dargestellte Vorrichtung, welche zunächst anhand der beiden ersten Figuren beschrieben wird, weist im wesentlichen fünf aufeinanderfolgende Bearbeitungsstationen 1 bis 5 auf. Auf der Eingangsseite (links in den Fig. 1 und 2) ist eine Rollentraganordnung für eine Materialrolle bakannten Aufbaus vorgesehen (nicht dargestellt). Sie ist für Materialrollen einer Breite von beispielsweise 560 mm und einem Durchmesser von 1200 mm vorgesehen. Da der Materialtransport durch die Vorrichtung in Schritten erfolgt, ist der Rollentraganordnung eine Kompensationsstelle nachgeschaltet, wo jeweils eine Schrittlänge des Materialbandes zwischengespeichert werden kann. Die Abrollgeschwindigkeit der Rolle kann damit im wesentlichen stetig bleiben, wobei mittels Lichtschranken die Abrollgeschwindigkeit dem jeweiligen Rollendurchmesser angepasst werden kann. Anschliessend wird die Materialbahn durch die seitliche Transporteinrichtung 6 erfasst und in Schritten durch die Vorrichtung gefördert. Die erste Bearbeitungsstelle ist eine Kontaktheizung 1 mit zwei geheizten Platten 10 und 11, zwischen welchen die Folie 7 einklemmbar ist. Die elektrische Heizung der Platten ist unabhängig voneinander auf einen einstellbaren Sollwert regelbar. Die beiden Platten 10, 11 können mit einem wählbaren Pressdruck die Folie 7 intermittierend einklemmen und wieder freigaben. Zu diesem Zweck ist mindestens eine der Platten, in der Figur die obere Platte 10, mit einer entsprechenden Hydraulik- oder Pneumatik versehen. Die Temperatur sowie die Anpressdruck der Platten werden so eingestellt, dass in der vorgesehenen Schrittdauer von z.B. 4 sec. die für das jeweilige Material notwendige Aufheizung erfolgt. Bei Mehrschichtfolien mit innenliegenden, temperaturempfindlichen Sperrschichten werden die genannten Grössen so eingestellt, dass sich das gewünschte Temperaturprofil in der Folie ausbildet. In der Kontaktheizung wird die Folie über im wesentlichen die gesamte Arbeitsfläche gleichmässig erwärmt, jedoch noch nicht bis zum Erweichungspunkt. Ein Kleben der Folie an den Platten 10, 11 ist damit ausgeschlossen. Unmittelbar nach der Kontaktheizung 1 gelangt die Materialbahn beim nächsten Arbeitsschritt zur Strahlungsheizung 2. Diese besteht aus beidseitig der Folie 7 angeordneten, mittelwelligen Strahlern 21, die zur Verminderung der Luftkonvektion in einem Gehäuse 22 angeordnet sind.

Innerhalb der zur Verfügung stehenden Schrittzeit kann damit die restliche Erwärmung auf den Erweichungspunkt der Folie erfolgen. Die in diesem Bereich entstehende Querdehnung der Folie, welche durch die Einwirkung des Eigengewichts noch verstärkt wird, kann zu einem Durchhang führen, durch welchen die Abstände zwischen Folie und Strahler verändert werden. Um diesen Durchhang aufzunehmen bzw. zu reduzieren, können zwei Massnahmen vorgesehen sein: Die eine besteht in der Stützung der Folie in deren zentralem Bereich durch mindestens ein mitlaufendes Stützorgan. Bei der dargestellten Vorrichtung sind hierzu zwei mitlaufende Drahtseile 23 vorgesehen, die über Umlenk- bzw. Antreibsrollen 24 vor der Strahlungsheizung von unten an die Folie herangeführt werden und diese bis in die Formeinrichtung 3 stützen. Des weiteren kann durch Transportvorrichtung im Bereich der Strahlungsheizung eine lokale Querstreckung bewirkt werden, wie noch im Detail erläutert werden wird. Die beschriebene zweistufige Heizung stellt insbesondere für Mehrschichtfolien eine optimale Erwärmung sicher. Während mit der Kontaktheizung der Folie schnell und energiesparend eine Temperaturprofil aufgeprägt wird, bringt die Strahlungsheizung schliesslich die stabilen Deckfolien ohne Beschädigung der inneren (Sperr-) Folien auf ideale Erweichungstemperatur. Im speziellen hat sich diese Heizung bewährt für die Verarbeitung einer Mehrschichtfolie, bei der eine Sperrfolie aus Saren (einem Vinylidenchlorid-Vinylchlorid-Copolymer) mittels je eines Haftvermittlers mit Polypropylenaussenfolien verbunden sind, wobei die gesamte Foleindicke ca. 900 µm beträgt, zu Behälterteilen. Es kommen aber auch

andere Barrièrepolymere wie EVOH hierfür in Frage.

Die Formgebung kann in einer nachfolgenden Warmformeinrichtung 3 auf an sich bekannte Weise erfolgen. Diese ist derart ausgestaltet, dass sowohl im Positiv- als auch im Negativverfahren mit Vakuumverformung gearbeitet werden kann, und es andererseits auch möglich ist, Druckluftverformung vorzunehmen. Die Ausstanzeinrichtung kann dabei direkt in der Warmformeinrichtung integriert sein, oder wie beim beschriebenen Ausführungsbeispiel, bei einem oder mehreren nachfolgenden Arbeitsschritten erfolgen. Eine Kniehebelanordnung (nicht gezeigt) erlaubt das Oeffnen und Schliessen der Formen.

Die Warmformeinrichtung gemäss Fig. 1 ist zur Druckluftverformung ausgestaltet. In einer unteren Negativform 31 mit Luftaustrittskanälen 32 sind Ausnehmungen 33 zur gleichzeitigen Formung von sechs schalenartigen Behälterteilen ausgebildet. Zwischen den Ausnehmungen 33 sind Kanäle für die Drahtseile 23 vorgesehen. Mittels einer oberen Platte 34 können die einzelnen Ausnehmungen luftdicht geschlossen werden, wonach mittels Druckluft die Schalen geformt werden.

Beim beschriebenen Ausführungsbeispiel, das sich auf die erwähnte, thermisch schwierige Mehrschichtfolie bezieht, ist die Ausstanzeinrichtung von der Warmformeinrichtung getrennt, damit sich die Folie vor dem Ausstanzen ausreichend abkühlen kann, indem sonst besonders die noch weiche Sperrfolie am Stanzwerkzeug anhaftet und Fäden zieht. Die Ausstanzeinrichtung ist derart ausgestaltet, dass trotz unregelmässigem Schwund der Folie beim Abkühlen nach dem Warmformen für jeden Behälter ein gleicher, definierter Aussenumfang zu Stande kommt. Zu diesem Zwecke wird die Materialbahn zwischen den geformten Behältern bereichsweise so aufgetrennt, dass diese noch von der Materialbahn getragenen Behälter unabhängig voneinander in der eigentlichen Umfangsstanzstelle positioniert werden können. Hierzu ist gemäss einem ersten in Fig. 1 und 2 dargestellten Ausführungsbeispiel eine Vorstanzstelle 4 sowie eine nachfolgende Umfangsstanzstelle 5 vorgesehen. Die Vorstanzstelle 4 kann zugleich auch zur endgültigen Umfangsstanzung verwendet werden, falls die verarbeitete Folie dies zulässt. Bei Folien mit starkem Schwund dient sie jedoch lediglich vor Vorstanzung und Belassung von Sollbruchstellen 21 zwischen den einzelnen Behälterteilen bzw. der Materialbahn. Sie besteht aus einem oberen und einem unteren Stanzteil 42 und 43, die beide von der Materialbahn zurückziehbar sind. Im oberen Stanzteil 42, der beheizbar ist, ist entsprechend der angestrebten Vorstanzung eine Schneide 44 eingelassen, die gegen entsprechende Flächen am unteren Stanzteil 43 arbeitet. Nach der Vorstanzung gelangen die vorgeformten, an den Sollbruchstellen mit dem Materialband zusammenhängenden Behälterteile im nächsten Arbeitsschritt zur Umfangsstanzstelle 5. Auf dem Weg dazu hat sich die Folie abgekühlt, so dass ein Massschwund eingetreten sein kann. Um eine präzise Umfangsstanzung zu bewerkstelligen, werden die Behälterteile zunächst durch Brechstempel 51 aus dem Materialband 7 herausgebrochen und zugleich in eine untere Zentrieranordnung 52 gedrückt. Unmittelbar nach der Zentrierung erfolgt die Umfangsstanzung durch ein an einem oberen Stanzwerkzeug 53 angeordneten Messer 54, die dem exakten Umfang der Behälterteile entspricht. Anschliessend werden die Behälterteile auf herkömmliche Weise nach oben weggeführt (nicht gezeigt) und auf einer Stapelstation 8 gestapelt. Das verbleibende Bandmaterial wird ausgangsseitig aufgerollt (nicht dargstellt).

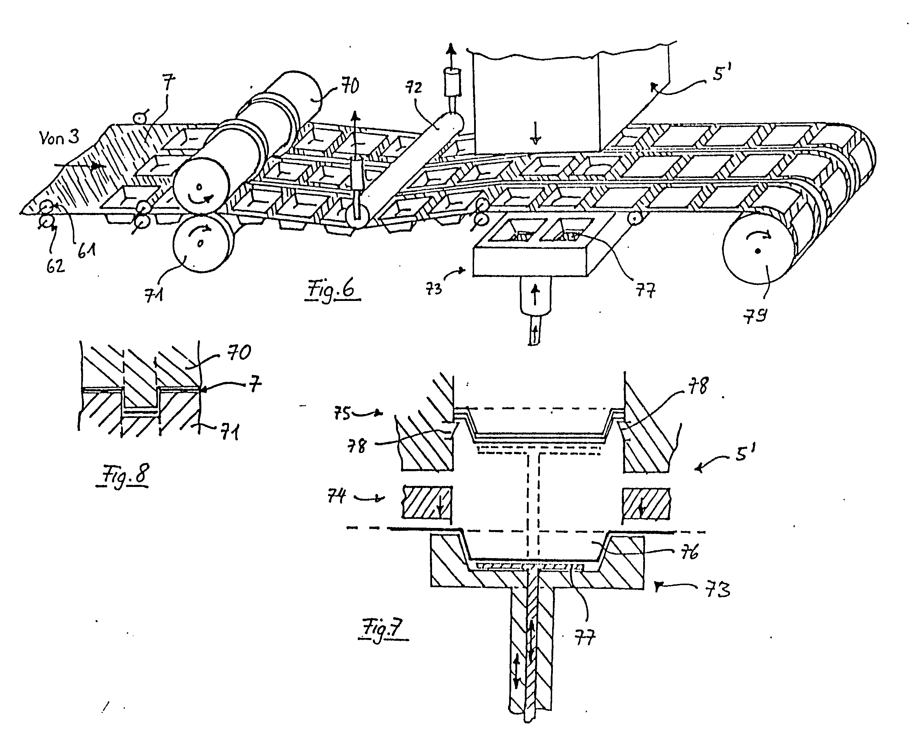

In den Figuren 6 bis 8 ist ein zweites Ausführungsbeispiel dargestellt, welches eine weitere Variante der auf die Warmformeinrichtung 3 folgenden Ausstanzung der Schalen zeigt mit der Anmeldenummer 88111517.4. Für diese wurde eine Europäische Teilanmeldung eingereicht. Die Materialbahn 7 mit den darin eingeformten Schalen wird zunächst durch Schneidwalzen 70, 71 zwischen Schalenlängsreihen in Einzelbahnen aufgetrennt, so dass jede der Einzelbahnen quer zur Transportrichtung unabhängig von den andern verschiebbar ist zur seitlichen Positionierung der Schalen beim nachfolgenden Umfangsstanzen in der Umfangsstanzstelle 5'. Die Schneidwalzen 70, 71 sind so profiliert (Fig. 8), dass bei der Trennung ein schmaler Streifen aus der Materialbahn herausgeschnitten wird. Nach den Schneidwalzen 70, 71 ist eine Rolle 72 vorgesehen, welche die Materialbahnen leicht aus der Ebene hinausdrückt. Vor dem Positionieren der Schalten in der Umfangsstanzstelle 5' wird die Rolle 72 angehoben. Die damit freiwerdende Länge der Materialbahn reicht aus, um ein ausreichendes Längsspiel beim Positionieren der Schalen zu gewährleisten. Die Umfangsstanzstelle 5' ist in Fig. 7 für eine einzige Schale im Querschnitt schematisch gezeigt. Sie besitzt einen unter der Materialbahn angeordneten Positionier- und Auswerfteil 73, einen darüber angeordneten Stanzteil 74 sowie ein Magazin 75 für die fertig ausgestanzten Schalen. Beim Transport der Materialbahn 7 bleiben der Positionier- und Auswerfteil 73 sowie der Stanzteil 74 von der Bahn abgehoben. Zum Ausstanzen wird zunächst der Positionier- und Auswerfteil 74 von unten gegen die Schalen angehoben, welche sich dank ihrem seitlichen und in Längsrichtung wirkenden Spiel in den entsprechenden Ausnehmungen 76 ausrichten. Danach erfolgt die Umfangsstanzung durch Senken des Stanzteils 74. Die ausgestanzten Schalen werden hernach mittels einem Auswerfer 77 durch den Stanzteil 74 hindurch in das oben gelegene Magazin 75 verschoben und dort von unter an den Jeweiligen Schalenstapel herangeführt, der durch elastische Vorsprünge 78 im Magazin gehalten ist. Nach dem Zurückziehen des Auswerfers 77 ist der Arbeitakt beendet. Das übrigbleibende Bandmaterial wird auf einer Rolle 79 aufgerollt. Die beschriebenen Stanzverfahren eignen sich, unabhängig von der Ausgestaltung der vorangehenden Aufheizeinrichtung, zur exakten Umfangsstanzung von warmgeformten Gegenständen, welche sich beim Erkalten in ihren Massen ändern, indem mittels der Zentrierung diese unerwünschten und nur schwer überblickbaren Effekte ausgeschaltet werden können.

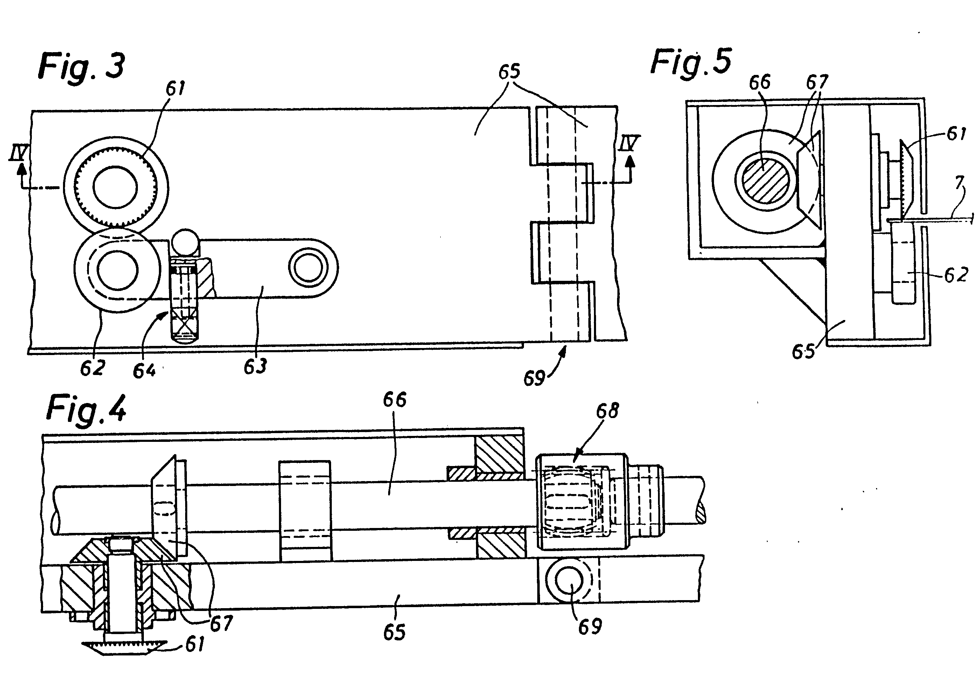

Der Transport der Materialbahn duch die Vorrichtung wird mit einer Einrichtung 6 bewerkstelligt, welche im Detail aus den Fig. 3 bis 5 ersichtlich ist. Wie in Fig. 2 schematisch angedeutet, verläuft die Transporteinrichtung 6 beidseitig der Materialbahn längs der gesamten Vorrichtung und greift an dem ausserhalb der Formgebungszone liegenden Rand der Materialbahn an. Bei einer Materialbahnbreite von z.B. 560 mm und einer Formgebungszone von max. 525 mm Breite bleibt im vorliegenden Beispiel hierfür auf jeder Seite ein Rand von ca. 17 mm. Die Transporteinrichtung weist nun längs der Vorrichtung verteilte Treibräder 61 auf, von denen jedes gegen eine entsprechende Stützrolle 62 abgestützt ist. Die Materialbahn 7 wird zwischen den Treibrädern und den Stützrollen erfasst, wie am besten in Fig. 5 zu sehen ist. Jede Stützrolle 62 ist mit einer einstellbaren Vorspannung gegen sein Treibrad 61 belastet. Dies kann, wie in Fig. 3 gezeigt, durch die Aufhängung der Stützrolle 62 an einem Schwenkhebel 62 erreicht werden, der durch eine pneumatische Zylinder-Kolbeneinrichtung 64 belastet wird. Die Stützrollen 62 sind vorzugsweise mit Kugellagern versehen, um einen geringen Transportwiderstand zu bewerkstelligen. Die Treibräder weisen an ihrem keilförmig zusammenlaufenden Umfang eine feine Zahnung auf, um die Reibung gegen die Folie zu erhöhen. Die Angriffsfläche am Umfang ist auf die Belastung der Stützrolle 62 so abgestimmt, dass die Treibräder teilweise in die Materialbahn eindringen, um so einen Linieneingriff zu schaffen. Dies ist von Bedeutung zu Erzielung einer definierten Förderrichtung, insbesondere in jenen Bereichen, in denen der Transport mit einer Querkomponente erfolgen soll, wie bei der beschriebenen Vorrichtung im Bereich der Strahlungsheizung 2. Die keilförmige Ausgestaltung des Eingriffsbereiches der Treibräder verhindert zudem ein Herausgleiten des Materialbands während der Bearbeitungsschritte, bei denen Querkräfte im Materialband auftreten können. Der Antrieb der Treibräder erfolgt starr durch je eine Antriebswelle 66 über zwei Kegelräder 67. Der starre Antrieb stellt eine exakte Einhaltung der gewählten Schrittlänge sicher und bedarf nur geringer Wartung. Die Transporteinrichtung ist in einem Tragelement 65 befestigt, welches an einem Maschinengestell (nicht gezeigt) befestigt ist.

Zur Bewerkstelligung einer bereichsweisen Querförderkomponente, etwa zur Kompensation eines unerwünschten Durchhangs, wie bei der beschriebenen Vorrichtung oder aber zur Querreckung des Bandmaterials, kann das Tragelement 65 an den erforderlichen Stellen mit einem Scharnier 69 und die Antreibswelle 66 mit einer als sphärisches Gelenk dienenden Zahnkupplung 68 versehen sein. Bei der vorstehend beschriebenen Vorrichtung sind solche Scharniere bzw. Gelenke vor und nach der Strahlungsheizung 2 vorgesehen, so dass in diesem Bereich die Treibräder 62 in einem Winkel zur Transportrichtung angeordnet werden können, mit der entsprechenden Querförderung als Folge. Es ist zu betonen, dass die beschriebene Transporteinrichtung 6 nicht nur im Zusammenhang mit dem vorstehend beschriebenen Anlageteilen verwendbar ist, sondern sich generell einget für den Materialbahntransport.

In Kombination mit der dargestellten Vorrichtung weist sie jedoch besondere Vorteile auf, indem eine sehr exakte Schrittlänge einhaltbar ist und im Bereich der Strahlungsheizung ein entstehender Durchhang ausgeglichen werden kann.

Wie bereits erwähnt wurde, ist die hier beschriebene Vorrichtung zur Herstellung von Gegenständen aus einer Materialbahn einer thermoplastischen Folie insbesondere geeignet zur Verarbeitung von Mehrschichtfolien mit wärmeempfindlichen Innenschichten. Eine solche Folie ist etwa ein Laminat einer Dicke von 900 um aus Polypropylendeckfolien, die mittels Haftvermittler mit einer innenliegenden Sperrschicht aus Saran verbunden sind. Solche relativ dicken Mehrschichtfolien, welche sich wegen der guten Sperreigenschaften zur Herstellung von Lebensmittelbehältern eignen, waren bischer wegen des schwierigen thermischen Verhaltens der Folie nur schwer Verarbeitbar. Die vorliegende Vorrichtung erlaubt dies nun in einwandfreier Weise, was insbesondere auf die zweischrittige Ausgestaltung der Aufheiz- und Ausstanzvorridhtungen zurückgeführt wird.

**Patentansprüche**

1. Vorrichtung zur Herstellung von Gegenständen aus einer thermoplastischen Materialbahn, mit einer Aufheizvorrichtung zum Erwärmen der Materialbahn bis in ihren Verformungsbereich, einer nachgeschalteten Warmformeinrichtung zur Formung der Gegenstände aus der Materialbahn, einer Ausstanzeinrichtung zum Abtrennen der geformten Gegenstände aus der Materialbahn, und einer Materialbahntransporteinrichtung zum Verschieben der Materialbahn durch die Vorrichtung, dadurch gekennzeichnet, dass die Transporteinrichtung beidseits längs den Materialbahnrändern je eine Mehrzahl an einem gemeinsamen Antrieb (66) angeschlossener Treibräder (61) aufweist, die je mit einer zugehörigen Stützrolle (62) zusammenwirken, wobei das Treibrad und die zugehörige Stützrolle gegeneinander einstellbar belastet sind und das Treibrad eine gezahnte Peripherie aufweist, derart, dass die Materialbahn auf der Stützrolle abgestützt ist und das Treibrad über einen Teil seines Umfangs in die Materialbahn eindringt, so dass es in einem linienförmigen Einegriff mit der Materialbahn steht zur Quer- und Längsführung derselben.

2. Vorrichtung nach Anspruch 1, dadurch gekennzeichnet, dass die Treibräder (61) ein keilförmig zur Zahnung zusammenlaufende Peripherie aufweisen.

3. Vorrichtung nach einem der vorangehenden Ansprüche, dadurch gekennzeichnet, dass die Stützrollen (62) freilaufend angeordnet sind und eine zylindrische Peripherie aufweisen.

4. Vorrichtung nach einem der vorangehenden Ansprüche, dadurch gekennzeichnet, dass die Stützrolle (62) jeder Transporteinheit eine Einrichtung (63, 64) zur Einstellung der Belastung gegen das Treibrad aufweist.

5. Vorrichtung nach einem der vorangehenden Ansprüche, dadurch gekennzeichnet, dass die Treibräder (61) und die Stützrollen (62) an Tragelementen (65) angeordnet sind, die beidseitig aussen an der Materialbahn verlaufen und an denen Antriebswellen (66) gelagert sind, welche sind längs der Materialbahn erstrecken und jeweils über Getriebe (67) mit den Vorschubeinheiten verbunden sind.

6. Vorrichtung nach einem der vorangehenden Ansprüche, dadurch gekennzeichnet, dass die Treibräder (62) streckenweise in einem Winkel zur Transportrichtung angeordnet sind, um in diesem Bereich (2) eine jeweils nach aussen gerichtete Querförderkomponente zu erzeugen und in den übrigen Bereichen im wesentlichen parallel zur Transportrichtung stehen.

7. Vorrichtung nach den Ansprüchen 5 und 6, dadurch gekennzeichnet, dass beim Uebergang von parallelen zu abgewinkelten Transportstrekken die Tragelemente (65) und die Antriebswellen (66) mit Scharnieren bzw. Gelenken versehen sind.

8. Vorrichtung nach einem der vorangehenden Ansprüche, dadurch gekennzeichnet, dass die Ausstanzeinrichtung eine Längs-Trennvorrichtung (70, 71) sowie eine nachgeschaltete, zentrierende Umfangsstanzstelle (5') aufweist, wobei die Materialbahn durch die Längs-Trennvorrichtung zwischen den geformten Gegenständen bereichsweise in der Längsrichtung der Materialbahn auftrennbar ist, dass die Gegenstände unabhängig voneinander in einer Zentrieranordnung (73) seitlich positionierbar sind, bevor sie in der Umfangsstanzstelle auf ihren Endumfang gestanzt werden.

9. Vorrichtung nach Anspruch 8, dadurch gekennzeichnet, dass die Längstrennvorrichtung Schneidwalzen (70, 71) aufweist.

10. Vorrichtung nach einem der Ansprüche 8 oder 9, dadurch gekennzeichnet, dass zwischen der Längs-Trennvorrichtung und der Umfangsstanzstelle (5') ein Materialbahndurchhang gebildet ist, derart dass die Gegenstände in der Umfangsstanzstelle (5') in Längsrichtung positionierbar sind.

11. Verwendung der Vorrichtung nach einem der vorangehenden Ansprüche zur Herstellung von Behälterteilen aus einer mehrschichtigen Kunststoff-Folie, die gegebenenfalls mit einer integrierten Sperrschicht gegen Aroma-, Gas- und Wasserdampfdurchtritt versehen ist.

12. Verwendung nach Anspruch 12, dadurch gekennzeichnet, dass die Mehrschichtfolie eine zwischen Polypropylenschichten eingeschlossene, thermoplastische Sperrschicht aus einem Barrièrepolymer, wie PVDC oder EVOH aufweist.

**Revendications**

1. Appareil pour le façonnage d'objets à partir d'une feuille de matériau thermoplastique, avec un dispositif de chauffage pour chaffer la feuille jusqu'à son domaine de déformation plastique, suivi d'un dispositif pour le façonnage plastique d'objets à partir de la feuille, un dispositif d'estampage pour séparer les objets formés de la feuille, et avec un dispositif de transport pour faire avancer la feuille à travers l'appareil, caractérisé en ce que le dispositif de transport comporte de chaque côté le long des bords du matériau plusieurs roulettes (61) d'entraînement accouplées à un dispositif d'entraînement commun (66), et dont chacune coopère avec un rouleau-support (62) correspondant, la roulette et le rouleau-support associés étant pressés l'un contre l'autre de manière réglable, et la roulette comportant une périphérie dentée de façon à ce que la feuille repose sur le rouleau-support et qu'une partie de la périphérie de la roulette d'entraînement s'enfonce dans la feuille, de façon à être linéairement en prise avec la feuille pour le guidage latéral et longitudinal de cette dernière.

2. Appareil selon la revendication 1, caractérisé en ce que les roulettes d'entraînement (61) présentent une périphérie que s'amenuise en biseau jusqu'à la denture.

3. Appareil selon une des revendications précédentes, caractérisé en ce que les rouleaux-support (62) tournent fou et présentent une périphérie cylindrique.

4. Appareil selon une des revendications précédentes, caractérisé en ce que le rouleau-support (62) de chaque unité de transport comporte un ensemble (63, 64) pour le réglage de la pression exercée contre la roulette d'entraînement.

5. Appareil selon une des revendications précédentes, caractérisé en ce que les roulettes d'entraînement (61) et des rouleaux-support (62) son agencés sur les organes porteurs (65) disposés des deux côtés à l'extérieur de la feuille et portant des arbres d'entraînement (66) qui s'étendenr le long de la feuille et sont reliés aux unités d'entraînement par des engrenages (67).

6. Appareil selon une des revendications précédentes, caractérisé en ce qu'en certains emplacements les roulettes d'entraînement (62) sont inclinées par rapport à la direction du transport pour créer dans ce secteur (2) une composante transversale d'avancement dirigée vers l'extérieur, et qu'aux autres emplacements les roulettes sont essentiellement parallèles à la direction du transport.

7. Appareil selon les revendications 5 et 6, caractérisé en ce qu'à la transition des secteurs de transport parallèles aux secteurs inclinés, les organes porteurs (65) et les arbres d'entraînement (66) sont munis de charnières, respectivement d'articulations.

8. Appareil selon une des revendications précédentes, caractérisé en ce que le dispositif d'estampage comporte un organe de séparation longitudinale (70, 71) suivi d'une station pour un estampage périphérique de centrage (5'), la feuille pouvant être découpée par endroits en sa direction longitudinale et entre les objets formés au moyen de l'organe de séparation longitudinale, et en ce que les objets peuvent être positionnés latéralement et indépendamment les uns des autres au moyen d'un dispositif de centrage (73) avant d'être estampés à leur pourtour définitif à la station d'estampage périphérique.

9. Appareil selon la revendication 8, caractérisé en ce que l'organe de séparation longitudinale comporte des cylindres de découpage (70, 71).

10. Appareil selon une des revendications 8 ou 9, caractérisé en ce qu'il est agencé pour que la feuille pende en feston entre l'organe de séparation longitudinale et la station d'estampage périphérique (5'), de manière à ce que les objects puissant être positionnés en direction longitudinale à l'endroit de cette station (5').

11. Utilisation de l'appareil selon une des revendications précédentes pour former des parties de récipients à partir d'une feuille de plastique à plusieurs couches pourvue le cas échéant d'une couche imperméable aux arômes, au gaz et à la vapeur d'eau.

12. Utilisation selon la revendication 11, caractérisé en ce que la feuille à plusieurs couches comporte une couche thermoplastique d'étanchéité composée d'un polymère formant barrière tel le PVDC ou le EVOH, placée entre des couches en polypropylène.

**Claims**

1. Apparatus for the production of articles from a web of a thermoplastic material, with a heating apparatus for a heating of the material web up to its deformation range, a subsequent hot shaping apparatus for the shaping of articles from the material web, a punching apparatus for severing the shaped articles from the material web, and a material web conveying mechanism for transporting the material web through the apparatus, charcterized in that the conveying mechanism comprises at both sides along the edge of the material web a respective plurality of driving wheels (61) coupled to a common drive (66) which cooperate each with a corresponding supporting roller (62), whereby the driving wheel and the corresponding supporting roller are reciprocally adjustably loaded and the driving wheel includes a toothed periphery such that the material web is supported on the supporting roller and the driving wheel penetrates along a part of its circumference into the material web such that it is in a line like engagement with the material web for a lateral and longitudinal guiding thereof.

2. Apparatus according to claim 1, characterized in that the driving wheels (61) comprise a periphery converging wedge-like to the toothing.

3. Apparatus according to one of the preceding claims, characterized in that the supporting rollers (62) are arranged freewheeling and comprise a cylindrical periphery.

4. Apparatus according to one of the preceding claims, characterized in that the supporting roller (62) of each conveying unit includes a mechanism (63, 64) for the adjusting of the loading against the driving wheel.

5. Apparatus according to one of the preceding claims, characterized in that the driving wheels (61) and the supporting rollers (62) are arranged on supporting members (65) which extent at both sides outside on the material web, and on which drive shafts (66) are supported which extend along the material web and are each coupled via a gearing (67) to the feeding units.

6. Apparatus according to one of the preceding claims, characterized in that the supporting rollers (62) are sectionwise oriented at an angle relative to the direction of transport in order to produce in this section (2) a respective lateral conveying component directed towards the outside and are oriented in the other sections subtantially parallel to the direction of transport.

7. Apparatus according to claims 5 and 6, characterized in that the supporting members (65) and the drive shafts (66) are provided with hinges or joints, respectively, at the transition from parallel to angled transport sections.

8. Apparatus according to one of the preceding claims, characterized in that the punching apparatus comprises a length-severing device (70, 71) as well as a subsequent centering circumfernce punching station (5'), whereby the material web is separable by the length-severing device between the shaped articles sectionwise in the longitudinal direction of the material web, in that the articles are laterally positionable independently from each other in a centering device (73) before they are punched to their final circumference in the circumference punching station.

9. Apparatus according to claim 8, characterized in that the length-severing device comprises cutting rollers (70, 71).

10. Apparatus according to one of the claims 8 or 9, characterized in that a sag of the material web is produced between the length-severing device and the circumference punching station (5'), such that the articles in the circumference punching station (5'), such that the articles in the circumference punching station (5') are positionable in the longitudinal direction.

11. Use of the apparatus according to one of the preceding claims for the production of container parts from a multilayered plastic foil, which possible is provided with an integrated layer against a transgressing of flavor, gas and water vapor.

12. Use according to claim 11, characterized in that the multilayered foil comprises a thermoplastic barrier layer of a barrier polymer such as PVDC or EVOH enclosed between polypropylene layers.

Fig.1

Fig.2

## Fig. 3

65

61

IV

IV

62    64    63    69

## Fig.5

66    67    61

7

62

65

## Fig.4

66

68

67

61

65

69

EP 0 146 700 B1

2

Von 3

7

70

72

5'

62

61

71

_Fig.6_

73

77

79

70

7

71

_Fig.8_

75

78

78

5'

74

76

73

77

_Fig.7_

EP 0 146 700 B1